# EUROPEAN PATENT APPLICATION

(11) **EP 4 746 518 A1**
(43) Date of publication of application: **20.05.2026**
(21) Application number: 24855628.4
(22) Date of filing: 09.08.2024
(51) Int. Cl.: H04W 36/00, H04W 36/30

(54) **CELL HANDOVER METHOD AND RELATED APPARATUS**

(30) Priority: 18.08.2023 CN 202311045498
(71) Applicant: Huawei Technologies Co., Ltd., Shenzhen, Guangdong 518129 (CN)
(72) Inventor: FAN, Bo, Shenzhen, Guangdong 518129 (CN)
(74) Representative: Maiwald GmbH
(86) International application number: PCT/CN2024/111244
(87) International publication number: WO 2025/039902

(57) **Abstract**

This application provides a cell handover method and a related apparatus, applied to the field of communication technologies. In the technical solution provided in this application, a terminal device in a terminal device group receives terminal group information from a network device, reports a cell measurement result to the network device based on the terminal group information, and/or performs a random access procedure based on the terminal group information, to complete a cell handover of the terminal device group. In this application, the terminal device performs the cell handover of the terminal device group and/or performs the random access procedure based on the terminal group information indicated by the network device, so that the cell handover of the terminal device group can be efficiently implemented, to resolve a problem of a high handover delay in a scenario in which network resources are limited.

## Description

This application claims priority to Chinese Patent Application No. 202311045498.9, filed with the China National Intellectual Property Administration on August 18, 2023 and entitled "CELL HANDOVER METHOD AND RELATED APPARATUS", which is incorporated herein by reference in its entirety.

### TECHNICAL FIELD

This application relates to the field of communication technologies, and in particular, to a cell handover method and a related apparatus.

### BACKGROUND

In a communication system, for example, a 5th generation (5th generation, 5G) communication system, user equipment (user equipment, UE) usually needs to perform cell handover, to improve performance of transmission between the UE and an access network (access network, AN) device.

A common cell handover method is as follows: A serving network device of the UE sends measurement configuration information to the UE. The UE measures a neighboring cell, and reports a measurement result to the serving network device. After receiving the measurement result, the serving network device determines that a cell of the UE needs to be changed to the neighboring cell. The serving network device sends a handover request to a network device in the neighboring cell, to notify the network device in the neighboring cell that the UE needs to be handed over to the neighboring cell. The network device in the neighboring cell determines whether to allow the UE to be handed over to the neighboring cell, and if the network device in the neighboring cell determines to allow the UE to be handed over to the neighboring cell, the network device in the neighboring cell sends handover response information to the serving network device. The serving network device sends a handover command to the UE, to indicate the UE to be handed over to the neighboring cell. The UE initiates a random access procedure, accesses the neighboring cell, establishes a connection to the network device in the neighboring cell, completes uplink and downlink synchronization, and so on.

However, in the foregoing method, a resource requirement is high, and a problem of a high handover delay due to a resource shortage occurs in a scenario in which resources are limited.

### SUMMARY

This application provides a method, an apparatus, and a system, to implement a cell handover of UE, so as to improve performance of transmission between the UE and an AN device.

According to a first aspect, this application provides a cell handover method. The method is applied to a terminal device. The method includes: receiving terminal group information from a network device; reporting a cell measurement result based on the terminal group information, and/or performing a random access procedure based on the terminal group information.

In this implementation, the terminal group information may be understood as information indicating related content of a terminal device group. For example, the terminal group information may indicate at least one of the following information: a specific terminal device group, terminal devices included in the terminal device group, a quantity of included terminal devices, terminal devices in the terminal device group that can perform cell measurement, or terminal devices that can perform a random access procedure.

For example, the terminal group information includes at least one of the following information: an identifier of the terminal device group, an identifier of the terminal device in the terminal device group, the quantity of terminal devices in the terminal device group, or an identifier of a first terminal device in the terminal device group. It may be understood that the identifier of the first terminal device may be the identifier of the first terminal device in the terminal device group, or a reused identifier of the first terminal device in another scenario.

In the method, the first terminal device in the terminal device group may be understood as a special terminal device, and the first terminal device may perform one or more operations in a cell handover procedure on behalf of another terminal device in the terminal device group, so that the another terminal device can achieve an expected effect of performing these operations without performing these operations in the cell handover procedure, to reduce resource overheads and avoid resource contention.

In some implementations, the network device may group terminal devices having a same movement rule into one terminal device group.

In some possible implementations, the terminal device receives measurement configuration information from the network device. The reporting the cell measurement result based on the terminal group information may include: determining, based on the terminal group information, whether the terminal device is the first terminal device in the terminal device group; and if it is determined that the terminal device is the first terminal device in the terminal device group, reporting the cell measurement result obtained through measurement based on the measurement configuration information.

In the method, the measurement configuration information may include a configuration parameter related to cell measurement, and is used to measure quality of a cell (for example, a current cell or a neighboring cell). The network device determines, based on the cell measurement result reported by the terminal device, whether the terminal device in the terminal device group needs to perform cell handover. For example, when signal quality in a measurement result of the neighboring cell is better than signal quality of the current cell, the network device determines that the terminal device needs to be handed over from the current cell to the neighboring cell.

In some possible implementations, random access trigger information is received from the network device. The performing the random access procedure based on the terminal group information may include: determining, based on the terminal group information, whether the terminal device is the first terminal device in the terminal device group; and if it is determined that the terminal device is the first terminal device in the terminal device group, performing the random access procedure based on the random access trigger information.

In the method, before the terminal device in the terminal device group receives the random access trigger information, only the first terminal device may send a random access request message, and another terminal device does not need to send a random access request message.

In the method, after the first terminal device sends the random access request message, all terminal devices in the terminal device group receive the random access trigger information.

In some possible implementations, the random access trigger information is carried on a common control channel, or the random access trigger information is carried on a common control channel scrambled by using a common radio network temporary identifier (radio network temporary identifier, RNTI).

In some possible implementations, the common RNTI is configured by the network device for the terminal device.

In some possible implementations, the performing the random access procedure based on the terminal group information includes: sending a random access request message to the network device based on the random access trigger information; and receiving a random access response message from the network device.

In some possible implementations, if the terminal device is not the first terminal device in the terminal device group, the terminal device receives the random access response message sent by the network device.

In some possible implementations, the random access response message includes a plurality of temporary cell-radio network temporary identifiers (cell-radio network temporary identifiers, C-RNTIs), and the plurality of temporary C-RNTIs are in one-to-one correspondence with a plurality of terminal devices in the terminal device group.

In some possible implementations, a temporary C-RNTI corresponding to the terminal device is determined from the plurality of temporary C-RNTIs based on the identifier of the terminal device in the terminal device group.

In some possible implementations, the determining, based on the terminal group information, whether the terminal device is the first terminal device in the terminal device group includes: when the terminal group information includes a first parameter, and the first parameter indicates the identifier of the first terminal device in the terminal device group, determining, based on the first parameter, whether the terminal device is the first terminal device in the terminal device group; when the terminal group information includes a second parameter, and the second parameter indicates whether the terminal device is the first terminal device in the terminal device group, determining, based on the second parameter, whether the terminal device is the first terminal device in the terminal device group; if the identifier of the terminal device in the terminal device group is a first identifier, the terminal device being the first terminal device in the terminal device group; or if the terminal device is a 1^{st} terminal device in the terminal device group, the terminal device being the first terminal device in the terminal device group.

According to a second aspect, this application provides a communication apparatus, including a module or a unit configured to implement the method according to the first aspect or any one of the possible implementations of the first aspect. It should be understood that each module or unit may implement a corresponding function by executing a computer program.

According to a third aspect, this application provides a communication apparatus, including a processor. The processor is configured to perform the communication method according to the first aspect and any one of the possible implementations of the first aspect. The communication apparatus may be a chip or a chip system used in a terminal device and a network device.

The apparatus may further include a memory, configured to store instructions and data. The memory is coupled to the processor. When the processor executes the instructions stored in the memory, the method described in the foregoing aspects may be implemented. The apparatus may further include a communication interface. The communication interface is used by the apparatus to communicate with another device. For example, the communication interface may be a transceiver, a circuit, a bus, a module, or another type of communication interface.

According to a fourth aspect, this application provides a computer-readable storage medium. The computer-readable medium stores program code to be executed by a communication apparatus, and the program code includes instructions for implementing the method according to the first aspect and any one of the possible implementations of the first aspect.

According to a fifth aspect, this application provides a computer program product including instructions. When the computer program product is run on a communication apparatus, the communication apparatus is enabled to implement the method according to the first aspect and any one of the possible implementations of the first aspect.

It may be understood that for effect that can be obtained in the second aspect to the fifth aspect, refer to the descriptions in the first aspect. Details are not described herein.

### BRIEF DESCRIPTION OF DRAWINGS

FIG. 1 is a diagram of a communication system to which a method according to an embodiment of this application is applicable;
FIG. 2 is a diagram of another communication system to which a method according to an embodiment of this application is applicable;
FIG. 3 is a diagram of example application scenarios of a cell handover method according to this application;
FIG. 4 is a flowchart of a cell handover method;
FIG. 5 is a schematic flowchart of a cell handover method according to an embodiment of this application;
FIG. 6 is a schematic flowchart of a cell handover method according to an embodiment of this application;
FIG. 7 is a schematic flowchart of a cell handover method according to an embodiment of this application;
FIG. 8 is a schematic flowchart of a cell handover method according to another embodiment of this application;
FIG. 9 is a diagram of a structure of a communication apparatus according to an embodiment of this application; and
FIG. 10 is a diagram of a structure of a communication apparatus according to another embodiment of this application.

### DESCRIPTION OF EMBODIMENTS

The following describes the technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that, in embodiments of this application, a term like "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term like "example" or "for example" is intended to present a relative concept in a specific manner.

In embodiments of this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device. It may be understood that the terminal device in this application may be replaced with a first device, the network device may be replaced with a second device, and the terminal device and the network device perform a corresponding communication method in this application.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice or data, for example, a handheld device or a vehicle-mounted device having a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and include devices that dedicated to only one type of application function and need to work with other devices such as smartphones, for example, various smart bands or smart jewelry for monitoring physical signs.

In embodiments of this application, an apparatus configured to implement a function of the terminal device may be a terminal device, or may be an apparatus that can support the terminal device in implementing the function, for example, a chip system. The apparatus may be installed in the terminal device or used in combination with the terminal device. In this embodiment of this application, the chip system may include a chip, or may include a chip and another discrete device. In embodiments of this application, an example in which the apparatus configured to implement the function of the terminal device is a terminal device is merely used for description, and constitutes no limitation on the solutions in embodiments of this application.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmission point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application. In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement some functions of the base station. For example, the RAN node may be a CU, a DU, a CU-CP, a CU-UP, an RU, or the like. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs that have different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, some downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting between the DU and the RU correspond to different categories (categories, Cats) of eCPRIs, for example, eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions (for example, one or more of RE mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (fast Fourier transform, FFT)/CP removal) after the demapping are moved to the RU for implementation. It may be understood that, for function descriptions of DUs and RUs corresponding to various categories of eCPRIs, refer to the eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an open RAN (ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be mounted in the network device or used in combination with the network device. In embodiments of this application, an example in which the apparatus configured to implement the function of the network device is a network device is merely used for description, and constitutes no limitation on the solutions in embodiments of this application.

The network device and/or the terminal device may be deployed on land, including an indoor device, an outdoor device, a handheld device, or a vehicle-mounted device, may be deployed on water, or may be deployed on an airplane, a balloon, and a satellite in air. Scenarios in which the network device and the terminal device are located are not limited in embodiments of this application. In addition, the terminal device and the network device may be hardware devices, may be software functions running on dedicated hardware, or software functions running on general-purpose hardware, for example, virtualized functions instantiated on a platform (for example, a cloud platform), or may be entities including a dedicated or general-purpose hardware device and a software function. Specific forms of the terminal device and the network device are not limited in this application.

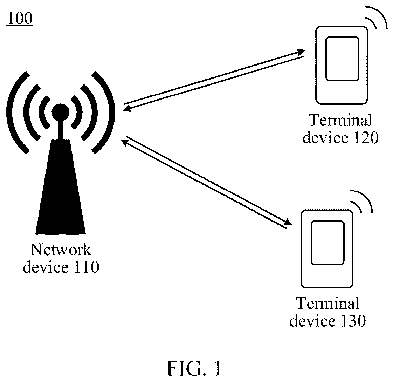

FIG. 1 is a diagram of a communication system to which a method according to an embodiment of this application is applicable. As shown in FIG. 1, the communication system 100 may include at least one network device, for example, a network device 110 shown in FIG. 1. The communication system 100 may further include at least one terminal device, for example, a terminal device 120 and a terminal device 130 shown in FIG. 1.

The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

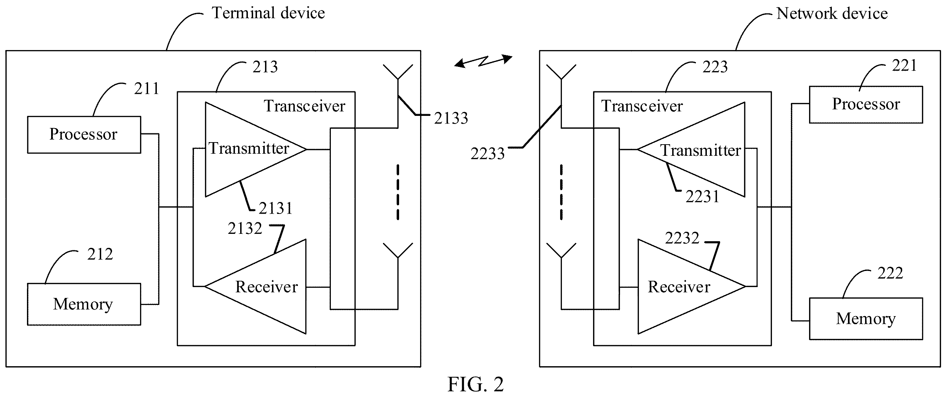

FIG. 2 is a diagram of another communication system to which a method according to an embodiment of this application is applicable. As shown in FIG. 2, a terminal device includes a processor 211, a memory 212, and a transceiver 213. The transceiver 213 includes a transmitter 2131, a receiver 2132, and an antenna 2133. A network device includes a processor 221, a memory 222, and a transceiver 223. The transceiver 223 includes a transmitter 2231, a receiver 2232, and an antenna 2233.

The processor 211, the memory 212, and the transceiver 213 communicate with each other through an internal connection path. The processor 221, the memory 222, and the transceiver 223 communicate with each other through an internal connection path.

The receiver 2132 may be configured to receive transmission control information through the antenna 2133, and the transmitter 2131 may be configured to send transmission feedback information to the network device through the antenna 2133. The transmitter 2231 may be configured to send the transmission control information to the terminal device through the antenna 2233, and the receiver 2232 may be configured to receive, through the antenna 2233, the transmission feedback information sent by the terminal device.

It should be noted that FIG. 1 and FIG. 2 are merely simplified diagrams of examples for ease of understanding. For example, the communication system may further include another device, for example, may further include a wireless relay device and/or a wireless backhaul device, and for another example, may further include one or more core network elements. This is not shown in FIG. 1 and FIG. 2. During actual application, the communication system may include a plurality of network devices, and may also include a plurality of terminal devices. Quantities of network devices and terminal devices included in the communication system are not limited in embodiments of this application.

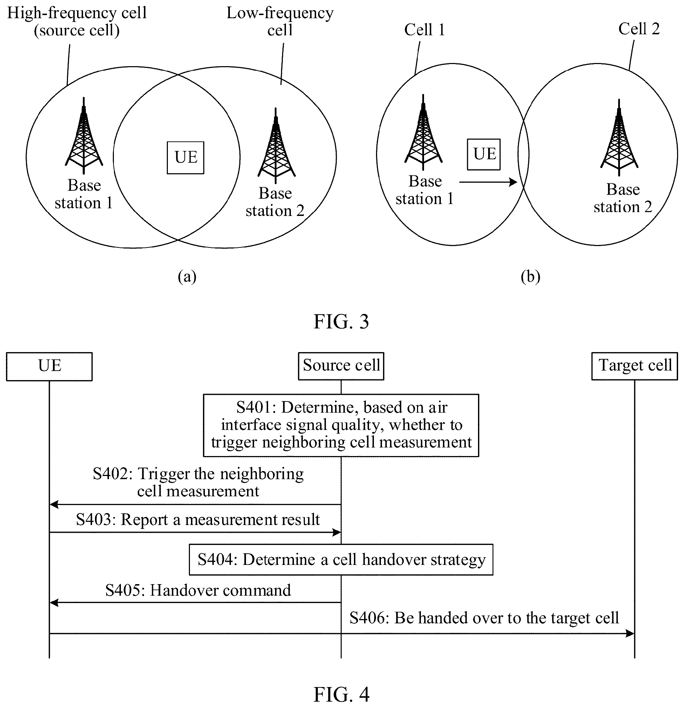

FIG. 3 is a diagram of example application scenarios of a cell handover method according to this application. In an application scenario shown in (a) in FIG. 3, both a high-frequency cell and a low-frequency cell are included, and UE is within both a coverage area of the high-frequency cell and a coverage area of the low-frequency cell.

When a current serving cell of the UE is a high-frequency cell provided by a base station 1, if fading (or strong fading) of a high-frequency channel between the UE and the base station 1 is caused because the UE is obstructed (or strongly obstructed), or strong fading of the high-frequency channel between the UE and the base station 1 is caused by weather, performance of transmission between the base station 1 and the UE is severely affected. In this case, the serving cell of the UE may be changed from the high-frequency cell to a low-frequency cell provided by a base station 2, that is, the UE may perform cell handover.

In this embodiment, the high-frequency cell is a cell with a higher communication frequency in two cells with different communication frequencies, and the low-frequency cell is a cell with a lower communication frequency in the two cells.

In an example, the high-frequency cell may be a cell with a communication frequency greater than or equal to 6 gigahertz (GHz), and the low-frequency cell may be a cell with a communication frequency less than 6 GHz.

In an application scenario shown in (b) in FIG. 3, the current serving cell of the UE is a cell 1 provided by the base station 1. When the UE moves along a direction of an arrow to an edge of a coverage area of the cell 1 and is to enter a coverage area of a cell 2 provided by the base station 2, or when the UE is located at the edge of the coverage service of the cell 1 and is severely interfered, the serving cell of the UE may be changed from the high-frequency cell to the low-frequency cell provided by the base station 2, that is, the UE may perform cell handover.

It may be understood that, in FIG. 3, that the high-frequency cell and the low-frequency cell are respectively provided by the base station 1 and the base station 2 is merely an example, and the high-frequency cell and the low-frequency cell may alternatively be provided by a same base station. That the cell 1 and the cell 2 are respectively provided by the base station 1 and the base station 2 is also merely an example, and the cell 1 and the cell 2 may alternatively be provided by a same base station.

It may be understood that the cell handover scenarios shown in FIG. 3 are merely examples, and the technical solutions in this application may be applied to any cell handover scenario.

In this embodiment of this application, it may be understood that a cell may be understood as a carrier. For example, that the base station provides a high-frequency cell service may be understood as that the base station sends information by using a high-frequency carrier. For another example, that the UE is located within a coverage area of a cell may be understood as that the UE is located within a coverage area of a carrier.

FIG. 4 is a flowchart of a cell handover method. The method shown in FIG. 4 includes S401 to S406.

S401: A source cell determines, based on air interface signal quality of UE, whether to trigger neighboring cell measurement.

S402: When determining, based on the air interface signal quality of the UE, to trigger the neighboring cell measurement, the source cell delivers measurement configuration information to the UE. The measurement configuration information may indicate a measurement resource used to measure signal quality of the source cell and signal quality of a neighboring cell.

S403: The UE performs measurement based on the measurement configuration information, and reports a measurement result. For example, when finding that the signal quality of the neighboring cell is better than the signal quality of the source cell, the UE may report the event to the source cell.

S404: The source cell determines a cell handover strategy based on the measurement result reported by the UE, to be specific, determines whether the UE can be handed over and determines a target cell of the UE.

S405: The source cell sends a handover command to the UE, to notify the UE of the target cell to which the UE can be handed over.

S406: The UE initiates a random access procedure, and accesses the target cell, to complete a process of handing over from one cell to another cell.

Through analysis, the inventor finds that, in a same time period, each terminal device in a group of terminal devices located in a same physical area (for example, a same vehicle) needs to separately perform the foregoing handover procedure shown in FIG. 4. This causes a problem of severe resource contention. For example, a group of terminal devices simultaneously access the neighboring cell, but resources for random access are limited, and it is difficult to meet access requirements of these terminal devices. Consequently, a plurality of terminal devices need to queue for cell access, causing a high delay.

Therefore, this application provides a new technical solution. In this technical solution, terminal devices are grouped, and only some terminal devices in a same terminal device group may perform one or more operations in a cell handover procedure on behalf of all terminal devices in the group, so that all the terminal devices in the group can finally implement a cell handover. In this embodiment of this application, the terminal device that performs the one or more operations in the cell handover procedure on behalf of all the terminal devices in the group may be referred to as a first terminal device.

In some implementations, the one or more operations may include at least one of cell measurement, cell measurement result reporting, and random access request initiation.

In some implementations, a same terminal device group may include a plurality of terminal devices whose moving tracks have a same rule. For example, a plurality of terminal devices located in a same vehicle may form a terminal device group.

In the technical solution provided in this application, terminal devices are grouped, and a concept of the first terminal device is introduced, to replace another terminal device in the terminal device group to perform operations such as measurement reporting and/or random access. This reduces a quantity of terminal devices that communicate with a network device, to avoid resource congestion.

In this embodiment of this application, after the terminal devices are grouped to obtain the terminal device group, the network device may indicate some related information of the terminal device group to the terminal device, so that the terminal device can perform the operation in the cell handover procedure based on the related information.

In this embodiment of this application, the related information of the terminal device group may be referred to as terminal device group information.

After receiving the terminal device group information, the terminal device may determine, based on the terminal device group information, whether the terminal device is the first terminal device. When determining that the terminal device is the first terminal device, the terminal device may perform an operation that can be performed by the first terminal device. When determining that the terminal device is not the first terminal device, the terminal device may not perform an operation that needs to be performed by the first terminal device.

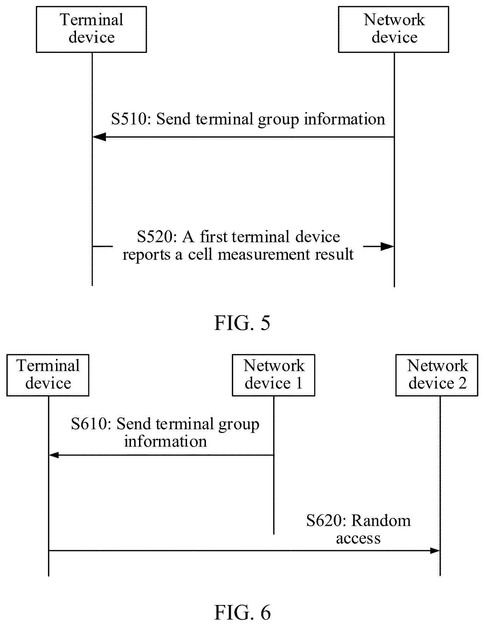

FIG. 5 is a schematic flowchart of a cell handover method according to an embodiment of this application. As shown in FIG. 5, the method may include S510 and S520.

S510: A network device sends terminal group information to a terminal device. Correspondingly, the terminal device receives the terminal group information from the network device.

It may be understood that the network device may be a source network device of the terminal device, or a network device that currently provides a cell service for the terminal device.

It may be understood that the network device may send the terminal group information to one or more terminal devices. For example, the network device sends the terminal group information to a plurality of terminal devices (or each terminal device) in a terminal device group.

In some possible implementations, the network device groups the terminal devices, and the obtained terminal group information may be understood as information indicating related content of the terminal device group.

For example, the terminal group information may indicate at least one of the following information: identification information of the terminal device group, indicating a specific terminal device group; an identifier of the terminal device in the terminal device group, indicating terminal devices that are included in the terminal device group; a quantity of terminal devices in the terminal device group, indicating how many terminal devices are included in the terminal device group; an identifier of a first terminal device in the terminal device, indicating terminal devices in the terminal device group that can perform cell measurement and/or terminal devices that can report cell measurement results, where the terminal devices that can perform cell measurement and/or can report cell measurement results are referred to as first terminal devices.

In some possible implementations, the network device may further send cell measurement configuration information to the terminal device, and correspondingly, the terminal device receives the cell measurement configuration information.

In an example, the cell measurement configuration information may be radio resource control (radio resource control, RRC) configuration information, may include a configuration parameter that is related to cell measurement and that is used to measure quality of a source cell and a target cell.

S520: The terminal device reports a cell measurement result based on the terminal group information.

In an example, that the terminal device reports the cell measurement result based on the terminal group information may include: determining, based on the terminal group information, whether the terminal device is the first terminal device in the terminal device group; and if it is determined that the terminal device is the first terminal device in the terminal device group, performing cell measurement and reporting the cell measurement result.

In an example, the cell measurement result may be a cell measurement result obtained through measurement based on the cell measurement configuration information sent by the network device.

In an example, if it is determined that the terminal device is not the first terminal device in the terminal device group, cell measurement is not performed, or cell measurement is performed but the cell measurement result is not reported.

In an example, the determining, based on the terminal group information, whether the terminal device is the first terminal device in the terminal device group may be implemented in the following manner: When the terminal group information includes a first parameter, and the first parameter indicates the identifier of the first terminal device in the terminal device group, whether the terminal device is the first terminal device in the terminal device group is determined based on the first parameter.

Optionally, the first parameter may be directly the identifier of the first terminal device, to be specific, a terminal device having the identifier is the first terminal device. The identifier may be a terminal device identifier in any form. For example, the identifier may be a local identifier of the first terminal device in the terminal device group.

In another example, the determining, based on the terminal group information, whether the terminal device is the first terminal device in the terminal device group may be implemented in the following manner: When the terminal group information includes a second parameter, and the second parameter indicates whether the terminal device is the first terminal device in the terminal device group, whether the terminal device is the first terminal device in the terminal device group is determined based on the second parameter.

In this example, the second parameter is not the identifier of the first terminal device, but a terminal device having a specific identifier may be specified as the first terminal device. For example, a terminal device whose identifier includes a specific value (for example, 0 or 1) is specified as the first terminal device. In this way, the terminal device is the first terminal device provided that the identifier of the terminal device includes the specific value. In a more specific example, if a local identifier of a terminal device is configured as the specific value, the terminal device is the first terminal device in the terminal device group.

In still another example, the determining, based on the terminal group information, whether the terminal device is the first terminal device in the terminal device group may be implemented in the following manner: If the identifier of the terminal device in the terminal device group is a first identifier, the terminal device is the first terminal device in the terminal device group.

In other words, a parameter is used to specially indicate whether a terminal device is the first terminal device. For the terminal device, the terminal device determines, based on a value of the parameter in received configuration information, whether the terminal device is the first terminal device in the terminal device group.

In still another example, if the terminal device is a 1^{st} terminal device in the terminal device group, the terminal device is the first terminal device in the terminal device group.

In other words, an x^{th} terminal device in the terminal device group may be specified as the first terminal device. For example, x=1.

In this embodiment of this application, after receiving a measurement report, the network device may determine, based on the measurement report, whether the terminal device in the terminal device group needs to perform cell handover and perform an operation needed in a cell handover procedure.

In this embodiment of this application, in an example, the network device may send the cell measurement configuration information only to the first terminal device.

In this embodiment of this application, in an example, the network device may send the terminal group information only to the first terminal device.

In some examples of this application, the network device may send the cell measurement configuration information only to the first terminal device, so that only the first terminal device in the terminal device group measures and reports cell quality, and another terminal device in the terminal device group does not need to measure or report the cell quality.

In some other examples of this application, the network device sends the measurement configuration information to all the terminal devices in the terminal device group, but only the first terminal device performs measurement and reporting, and another terminal device in the terminal device group does not need to perform measurement or reporting.

In some other examples of this application, the network device sends the measurement configuration information to all the terminal devices in the terminal device group, and all the terminals in the terminal device group perform measurement, but only the first terminal device performs reporting, and another terminal device in the terminal device group does not need to perform reporting.

It can be learned from the foregoing content that, in comparison with a case in which the network device sends the cell measurement configuration to all the terminals and all the terminals in the terminal device group need to perform cell measurement and report measurement results, the technical solution in this embodiment of this application can save resources, to avoid resource contention and further reduce a cell handover delay.

It may be understood that the network device in this embodiment of this application may be replaced with a source cell of the terminal device.

FIG. 6 is a schematic flowchart of a cell handover method according to an embodiment of this application. As shown in FIG. 6, the method may include S610 and S620.

S610: A network device 1 sends terminal group information to a terminal device. Correspondingly, the terminal device receives the terminal group information from the network device 1.

It may be understood that the network device may be a source network device of the terminal device, or a network device that currently provides a cell service for the terminal device.

For content related to the terminal group information in this step, refer to S510. Details are not described herein again.

S620: The terminal device performs a random access procedure based on the terminal group information.

It may be understood that before performing the random access procedure based on the terminal group information, the terminal device may perform cell measurement and report a cell measurement result to the network device 1.

It may be understood that the network device 1 may send cell measurement configuration information to the terminal device, and the terminal device performs cell measurement and reports the cell measurement result based on the cell measurement configuration information.

In an example, for an implementation in which the network device 1 may send the cell measurement configuration information to the terminal device, and the terminal device performs cell measurement and reports the cell measurement result based on the cell measurement configuration information, refer to the content in the embodiment shown in FIG. 5.

In an example, the network device may send the cell measurement configuration information to all terminal devices in a terminal device group, and all the terminal devices perform cell measurement and report cell measurement results based on the cell measurement configuration information.

In this embodiment of this application, before the terminal device performs the random access procedure based on the terminal group information, the network device 1 may send a handover request message to the network device 1, to notify the network device 2 that a group of terminal devices need to be handed over to a target cell of the network device 2.

In an example, the handover request message may include one or more of the following information: an identifier of the terminal device group, an identifier of the terminal device included in the terminal device group, a quantity of terminal devices included in the terminal device group, or indication information of a first terminal device.

In this embodiment of this application, after the network device 1 sends the handover request message to the network device 2 before the terminal device performs the random access procedure based on the terminal group information, the network device 2 may send a handover response message to the network device 1. The handover response message may include one or more of the following information: whether the terminal device group is allowed to be handed over to the target cell; information (for example, an identifier) about a terminal device that is in the terminal device group and that is allowed to be handed over to the target cell, where for example, when load of the network device 2 is greater than or equal to a load threshold, only some terminal devices are allowed to access the target cell; information (for example, an identifier) about a terminal device that is in the terminal device group and that is not allowed to be handed over to the target cell, where for example, when the load of the network device 2 is greater than or equal to the load threshold, access of some terminal devices to the target cell is rejected; and information about a random access resource used by the terminal device group to access the target cell.

The information about the random access resource may include at least one of the following information: information about a random access preamble (preamble) sequence, information about a time-frequency occasion (random access channel (random access channel, RACH) occasion) for sending a preamble, or information about a synchronization signal and broadcast channel resource block (synchronization signal and PBCH block, SSB) corresponding to random access.

The random access preamble sequence may be a preamble specially used by a terminal device group to perform random access.

The RACH occasion may be a RACH occasion specially used by a terminal device group to perform random access.

In an example, after receiving the handover response message from the network device 2, the network device 1 may send a handover command message to the terminal device in the terminal device group, to indicate each terminal device to be handed over to the target cell. For example, the network device 1 may send RRC configuration information to each terminal device, and the RRC configuration information may include configuration parameters of the target cell. After being handed over to the target cell, the terminal device may perform random access by using these configuration parameters.

Optionally, the network device 1 may reconfigure the terminal device group by using the RRC configuration information, for example, introduce a new terminal device, or exclude some terminal devices (for example, terminal devices that are not allowed to be handed over to the target cell).

In this embodiment of this application, in an example, the network device 1 may further send trigger signaling to the terminal device in the terminal device group. The trigger signaling is used to trigger each terminal device to perform the random access procedure. An example of the trigger signaling is a physical downlink control channel (physical downlink control channel, PDCCH).

Optionally, the PDCCH may be a common PDCCH, and all the terminal devices in the terminal device group may receive the PDCCH.

Optionally, the PDCCH is scrambled by using a common radio network temporary identifier (radio network temporary identifier, RNTI). The common RNTI may be configured by the network device 1 for the terminal device in the terminal device group.

Optionally, the network device 1 may configure a same RNTI value for all terminal devices in a terminal device group, and all the terminal devices in the terminal device group receive the PDCCH by using the RNTI value.

In some implementations, only the first terminal device in the terminal device group sends a random access request message to the network device 2, and another terminal device does not need to send the random access request message.

In an example, that the terminal device performs the random access procedure based on the terminal group information may include: determining, based on the terminal group information, whether the terminal device is the first terminal device in the terminal device group; and if it is determined that the terminal device is the first terminal device in the terminal device group, sending the random access request message to the network device 2.

It may be understood that the random access request message may include information about the terminal device group.

In an example, if it is determined that the terminal device is not the first terminal device in the terminal device group, the terminal device does not send the random access request message.

After receiving the random access request message, the network device 2 may send a random access response message to the terminal device in the terminal device group.

Optionally, the random access response message may include timing advance information, and all the terminal devices in the terminal device group synchronously access the target cell by using the timing advance information.

Optionally, the random access response message may include cell-radio network temporary identifier (cell-radio network temporary identifier, C-RNTI) information of the terminal device, and may include a plurality of pieces of C-RNTI information. Each C-RNTI corresponds to one terminal device. The C-RNTI information may be carried in the RRC configuration information, but may not be carried in the random access response message.

In an example, each terminal device in the terminal device group needs to receive the random access response message. In other words, even if only the first terminal device sends the random access request message, and another terminal device does not send the random access request message, the another terminal device also receives the random access response message. All the terminal devices may determine a receiving parameter of the random access response message, for example, a random access RNTI (random access RNTI, RA-RNTI) or a receiving time window, based on a parameter indicated in the trigger signaling, to receive the random access response message.

Optionally, the terminal device may determine, based on the preamble specially used by the terminal device group to perform random access, whether the received random access response message is sent to the terminal device group. Because another terminal device may also initiate random access, there is a case in which the network device 2 sends the random access response message to the another terminal device.

It can be learned from the foregoing content that, in comparison with a case in which all the terminals send the random access request message, in the technical solution in this embodiment of this application, only the first terminal device sends the random access request message, so that resources can be saved, to avoid resource contention and further reduce a cell handover delay.

It may be understood that the network device 1 in this embodiment of this application may be replaced with the source network device or a source cell of the terminal device, and the network device 2 may be replaced with a target network device or the target cell of the terminal device.

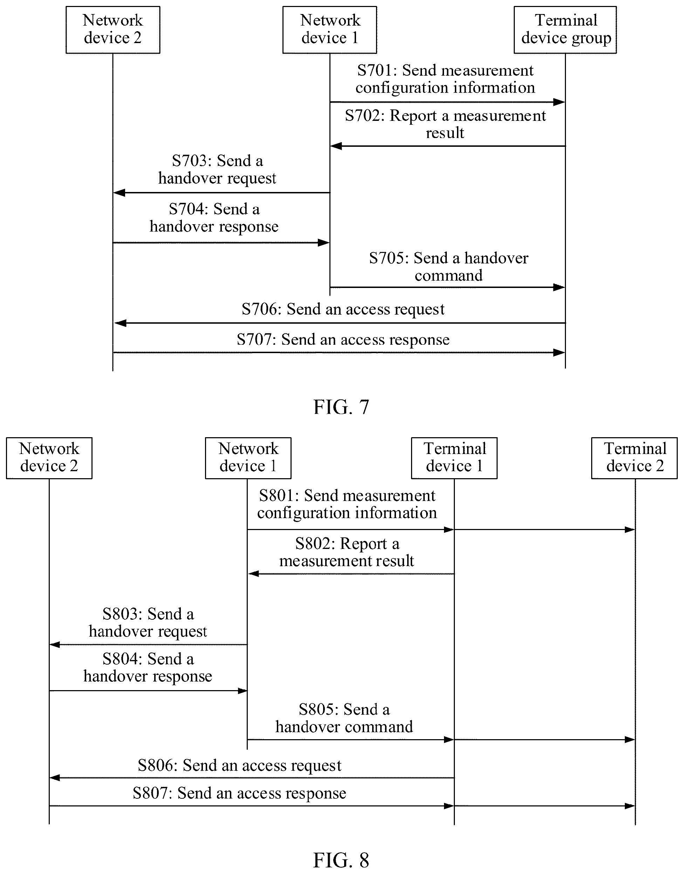

FIG. 7 is a schematic flowchart of a cell handover method according to an embodiment of this application. As shown in FIG. 7, the communication method may include S701 to S707.

S701: A network device 1 sends measurement configuration information to a terminal device group. Correspondingly, the terminal device group receives the measurement configuration information.

In some possible implementations, before sending the measurement configuration information, the network device 1 first groups terminal devices having a same movement rule into one terminal device group.

For example, the network device 1 may determine, by using methods such as positioning and Doppler information calculation, terminal devices having a same movement rule, for example, a same location, a same moving speed, and a same moving direction, and group these terminal devices into one terminal device group.

In this embodiment, after obtaining the terminal device group through grouping, the network device 1 sends information about the terminal device group to each terminal device in the terminal device group by using configuration information.

In some possible implementations, the configuration information may be RRC configuration information, and the configuration information includes terminal group information used to notify each terminal device in the terminal device group of the information about the terminal device group.

Optionally, the terminal group information includes an identifier of the terminal device group.

Optionally, the terminal group information includes information about a terminal device in the terminal device group, for example, a quantity of terminal devices and an identifier of the terminal device.

Optionally, the terminal group information may further include a local identifier of any terminal device in the terminal device group. The local identifier may indicate an index, a sequence, or the like of the terminal device in the terminal device group. For example, if the identifier of the terminal device in the terminal device group is k, it indicates that the terminal device is a k^{th} terminal device in the terminal device group.

Optionally, the terminal group information may further include a first terminal device in the terminal device group. The first terminal device is a special terminal device, and is responsible for exchanging some information with a network device on behalf of the terminal device group. Another terminal device may not need to exchange the information with the network device.

The following lists four implementations of indicating the first terminal device in the terminal device group.

In some possible implementations, an identifier of the first terminal device is directly indicated, and a terminal device having the identifier is the first terminal device. The identifier may be a terminal device identifier in any form. For example, the identifier may be the local identifier, to be specific, the local identifier of the terminal device in the terminal device group.

In some possible implementations, the identifier of the first terminal device is not indicated, but a terminal device having a specific identifier is specified as the first terminal device. For example, a terminal device whose local identifier is a specific value (for example, 0 or 1) is specified as the first terminal device. In this way, the terminal device is the first terminal device in the terminal device group provided that a local identifier of a terminal device is configured as the specific value.

In some possible implementations, the identifier of the first terminal device is not indicated, but an x^{th} (where for example, x=1) terminal device in the terminal device group is specified as the first terminal device.

In some possible implementations, a parameter is used to specially indicate whether a terminal device is the first terminal device. For any one of the foregoing terminal devices, the terminal device determines, based on a value of the parameter in received configuration information, whether the terminal device is the first terminal device in the terminal device group.

In this embodiment, after all terminal devices in the terminal device group receive the terminal group information, the network device 1 sends the measurement configuration information to the first terminal device, or the network device 1 sends the measurement configuration information to all the terminal devices in the terminal device group. The measurement configuration information may include the RRC configuration information, specifically includes a configuration parameter that is related to cell measurement and that is used to measure quality of a local cell and a neighboring cell.

S702: After completing cell measurement, the terminal device reports a measurement result to the network device 1. Correspondingly, the network device 1 receives the measurement result.

Optionally, only the first terminal device needs to report the measurement result, and another terminal device may not need to perform reporting. The reported measurement result is a cell quality measurement result of the local cell and the neighboring cell.

Optionally, when a specific condition is met, another terminal device may also perform reporting.

After receiving the reported measurement result, the network device 1 determines whether the terminal device in the terminal device group needs to perform cell handover.

S703: After determining that the cell handover needs to be performed, the network device 1 sends a handover request message to a network device 2, to notify the network device 2 that a group of terminal devices need to be handed over to a cell corresponding to the network device 2.

Optionally, the handover request message may include information (for example, an identifier) about the terminal device group.

Optionally, the handover request message may include information about a terminal device in the terminal device group, for example, a quantity of terminal devices, an identifier of the terminal device, and information (for example, the identifier) about the first terminal device.

S704: The network device 2 sends a handover response message to the network device 1.

Optionally, the handover response message may include whether the terminal device group is allowed to be handed over to the cell corresponding to the network device 2.

Optionally, the handover response message may include information (for example, an identifier) about a terminal device that is in the terminal device group and that is allowed to be handed over to the cell corresponding to the network device 2. For example, load of the network device 2 is high, and only some terminal devices are allowed to access the cell corresponding to the network device 2.

Optionally, the handover response message may include information (for example, an identifier) about a terminal device that is in the terminal device group and that is not allowed to be handed over to the cell corresponding to the network device 2. For example, the load of the network device 2 is high, and access of some terminal devices to the cell corresponding to the network device 2 is rejected.

Optionally, the handover response message may include information about a random access resource used by the terminal device group to access the cell corresponding to the network device 2, for example, information about a random access preamble preamble sequence, information about a time-frequency occasion (RACH occasion) for sending a preamble, and SSB information corresponding to random access. The random access preamble preamble sequence may be a preamble specially used by a terminal device group to perform random access, or the RACH occasion may be a RACH occasion specially used by a terminal device group to perform random access.

S705: The network device 1 sends a handover command message to the terminal device in the terminal device group, to indicate each terminal device to be handed over to the cell corresponding to the network device 2.

In some possible implementations, the network device 1 may send one piece of RRC configuration information to each terminal device, where the RRC configuration information includes configuration parameters of the cell corresponding to the network device 2. After being handed over to the cell corresponding to the network device 2, the terminal device uses these configuration parameters.

Optionally, the terminal device group may be reconfigured by using the RRC configuration information. For example, a new terminal device is introduced, or some terminal devices (for example, terminal devices that are not allowed to be handed over to a target cell) are excluded.

In some possible implementations, the network device 1 may further send trigger signaling, for example, a PDCCH, to each terminal device. The trigger signaling is used to trigger each terminal device to perform a random access procedure.

Optionally, the PDCCH is a common PDCCH, and all the terminal devices in the terminal device group may receive the PDCCH.

Optionally, the PDCCH is scrambled by using a common RNTI. The common RNTI is configured by the network device 1 for the terminal device in the terminal device group.

Optionally, the network device 1 may configure one RNTI value for all terminal devices in a terminal device group, and all the terminal devices in the terminal device group receive the PDCCH by using the RNTI value.

S706: The terminal device in the terminal device group sends a random access request message to the network device 2.

In some possible implementations, only the first terminal device sends the random access request message, and another terminal device does not need to send the random access request message.

S707: The network device 2 sends a random access response message to the terminal device group. Correspondingly, all the terminal devices in the terminal device group receive the random access response message.

Optionally, the random access response message may include timing advance information, and all the terminal devices in the terminal device group synchronously access the network device 2 by using the timing advance information.

Optionally, the random access response message may include C-RNTI information of the terminal device, and may include a plurality of pieces of C-RNTI information. Each C-RNTI corresponds to one terminal device. Specifically, assuming that the terminal device group includes N terminal devices, the random access response message needs to include N pieces of C-RNTI information. Each piece of C-RNTI information corresponds to one terminal device in the terminal device group. For example, a k^{th} C-RNTI in the random access response message corresponds to a terminal device whose identifier is k or a k^{th} terminal device in the terminal device group.

In some possible implementations, the C-RNTI information may be carried in the RRC configuration information, for example, the RRC configuration information in S701 or S705, but may not be carried in the random access response message.

Optionally, the C-RNTI may be replaced with a temporary C-RNTI (Temporary C-RNTI).

In this embodiment, each terminal device needs to receive the random access response message. In other words, even if only the first terminal device sends the random access request message, and another terminal device does not send the random access request message, the another terminal device also needs to receive the random access response message. All the terminal devices determine a receiving parameter of the random access response message, for example, an RA-RNTI or a receiving time window, based on a parameter indicated in the trigger signaling, to receive the random access response message.

Optionally, the terminal device may determine, based on the preamble specially used by the terminal device group to perform random access in S704, whether the received random access response message is sent to the terminal device group. Because another terminal device may also initiate random access, there is a random access response message sent to the another terminal device.

It may be understood that the network device 1 in this embodiment of this application may be replaced with a source network device or a source cell of the terminal device, and the network device 2 may be replaced with a target network device or the target cell of the terminal device.

FIG. 8 is a schematic flowchart of a cell handover method according to another embodiment of this application. As shown in FIG. 8, the communication method may include S801 to S807.

S801: A network device 1 sends measurement configuration information to a terminal device 1 and a terminal device 2. Correspondingly, the terminal device 1 and the terminal device 2 receive the measurement configuration information.

The terminal device 1 and the terminal device 2 are terminal devices having a same movement rule. The network device 1 groups the terminal device 1 and the terminal device 2 into one terminal device group, and terminal group information indicates that the terminal device 1 is a first terminal device.

For details of this step, refer to S701. Details are not described herein again.

S802: After completing cell measurement, the terminal device reports a measurement result to the network device 1. Correspondingly, the network device 1 receives the measurement result.

In some possible implementations, only the terminal device 1 needs to report the measurement result.

Optionally, when a specific condition is met, the terminal device 2 may also perform reporting.

After receiving the reported measurement result, the network device 1 determines whether the terminal device needs to perform cell handover.

S803: After determining that the cell handover needs to be performed, the network device 1 sends a handover request message to a network device 2, to notify the network device 2 that a group of terminal devices need to be handed over to a cell corresponding to the network device 2.

For details of this step, refer to S703. Details are not described herein again.

S804: The network device 2 sends a handover response message to the network device 1.

For details of this step, refer to S704. Details are not described herein again.

S805: The network device 1 sends a handover command message to the terminal device 1 and the terminal device 2, to indicate the terminal device 1 and the terminal device 2 to be handed over to the cell corresponding to the network device 2.

For details of this step, refer to S705. Details are not described herein again.

S806: The terminal device 1 sends a random access request message to the network device 2.

In some possible implementations, only the terminal device 1 sends the random access request message, and the terminal device 2 does not need to send the random access request message.

S807: The network device 2 sends a random access response message to the terminal device 1. Correspondingly, both the terminal device 1 and the terminal device 2 receive the random access response message.

Optionally, the random access response message may include timing advance information, and all the terminal devices in the terminal device group synchronously access the network device 2 by using the timing advance information.

Specifically, the terminal device group includes two terminal devices, and the random access response message includes two pieces of C-RNTI information. Each piece of C-RNTI information corresponds to the terminal device 1 and the terminal device 2.

In this embodiment, both the terminal device 1 and the terminal device 2 need to receive the random access response message. In other words, even if only the terminal device 1 sends the random access request message, and the terminal device 2 does not send the random access request message, the terminal device 2 also needs to receive the random access response message.

It may be understood that the network device 1 in this embodiment of this application may be replaced with a source network device or a source cell of the terminal device, and the network device 2 may be replaced with a target network device or a target cell of the terminal device.

It should be understood that, in this application, an indication includes a direct indication (also referred to as an explicit indication) and an implicit indication. Directly indicating information A means including the information A. Implicitly indicating the information A means indicating the information A based on a correspondence between the information A and information B and indicating the information A by directly indicating the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that the information C is used to determine the information D may further include an indirect determining case. For example, the information D is determined based on information E, and the information E is determined based on the information C.

In addition, in embodiments of this application, that "a device A sends information A to a device B" may be understood as that a destination end of the information A or an intermediate device in a transmission path between the device A and the destination end is the device B, and may include directly or indirectly sending the information to the device B. That "the device B receives the information A from the device A" may be understood as that a source end of the information A or an intermediate device in a transmission path between the device B and the source end is the device A, and may include directly or indirectly receiving the information from the device A. Information may undergo necessary processing, for example, a format change, between the source end for sending the information and the destination end. However, the destination end may understand valid information from the source end. Similar descriptions in this application may be understood similarly. Details are not described herein.

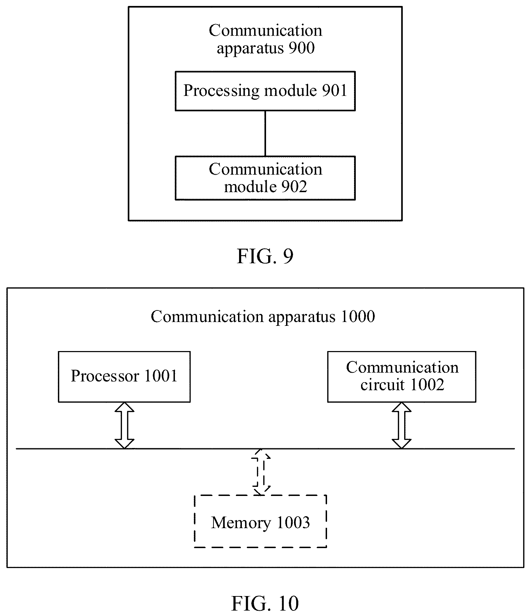

FIG. 9 is a diagram of a structure of a communication apparatus according to an embodiment of this application. As shown in FIG. 9, the apparatus 900 may include a processing module 901 and a communication module 902.

In a first example, the apparatus 900 may be configured to implement the communication method implemented by the terminal device in any one of the embodiments shown in FIG. 5 to FIG. 8. For example, the processing module 901 is configured to implement processing-related steps performed by the terminal device in any one of the embodiments shown in FIG. 5 to FIG. 8, and the communication module 902 is configured to implement steps such as sending and/or receiving performed by the terminal device in any one of the embodiments shown in FIG. 5 to FIG. 8.

In a second example, the apparatus 900 may be configured to implement the communication method implemented by the network device in any one of the embodiments shown in FIG. 5 to FIG. 8. For example, the processing module 901 is configured to implement processing-related steps performed by the network device in any one of the embodiments shown in FIG. 5 to FIG. 8, and the communication module 902 is configured to implement steps such as sending and/or receiving performed by the network device in any one of the embodiments shown in FIG. 5 to FIG. 8.

FIG. 10 is a diagram of a structure of a communication apparatus according to another embodiment of this application. As shown in FIG. 10, the apparatus 1000 includes a processor 1001 and a communication circuit 1002. The processor 1001 and the communication circuit 1002 are coupled to each other. It may be understood that the communication circuit 1002 may be a transceiver or an input/output interface. Optionally, the apparatus 1000 may further include a memory 1003, configured to store instructions executed by the processor 1001, or store input data needed by the processor 1001 to run instructions, or store data generated after the processor 1001 runs instructions. It may be understood that the memory 1003 may be located outside the processor 1001, or may be located inside the processor 1001.

In an example, the processor 1001 is configured to implement a function of the processing module 901, and the communication circuit 1002 is configured to implement a function of the communication module 902.

The apparatus 1000 may be a communication device, or may be a chip used in a communication device. For example, the apparatus 1000 may be UE or a chip used in UE, or may be a network device or a chip used in a network device. It may be understood that when the apparatus 1000 is UE or a network device, the communication circuit 1002 may be a transceiver.

Some embodiments of this application further provide a computer program product. When the computer program product is run on a processor, the method implemented by the terminal device in any one of the foregoing embodiments may be implemented, or the method implemented by the network device in any one of the foregoing method embodiments may be implemented.

Some embodiments of this application further provide a computer-readable storage medium. The computer-readable storage medium includes computer instructions. When the computer instructions are run on a processor, the method implemented by the terminal device in any one of the foregoing embodiments may be implemented, or the method implemented by the network device in any one of the foregoing method embodiments may be implemented.

Some embodiments of this application further provide a communication system. The system may implement the method implemented by the terminal device and the network device in any one of the foregoing embodiments.

It may be understood that the processor in embodiments of this application may be the following devices or all or some circuits configured to perform a processing function in the following devices: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the network device or the terminal device as discrete components.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal device, wherein the method comprises:
receiving terminal group information from a network device; and
reporting a cell measurement result based on the terminal group information, and/or performing a random access procedure based on the terminal group information.

2. The method according to claim 1, wherein the terminal group information comprises at least one of the following information: an identifier of the terminal device group, a quantity of terminal devices in the terminal device group, an identifier of the terminal device in the terminal device group, or an identifier of a first terminal device in the terminal devices in the terminal device group.

3. The method according to claim 1 or 2, wherein the method further comprises: receiving measurement configuration information from the network device; and
the reporting the cell measurement result based on the terminal group information comprises:
determining, based on the terminal group information, whether the terminal device is the first terminal device in the terminal device group; and
if it is determined that the terminal device is the first terminal device in the terminal device group, reporting the cell measurement result obtained through measurement based on the measurement configuration information.

4. The method according to any one of claims 1 to 3, wherein the method further comprises: receiving random access trigger information from the network device; and
the performing the random access procedure based on the terminal group information comprises:
determining, based on the terminal group information, whether the terminal device is the first terminal device in the terminal device group; and
if it is determined that the terminal device is the first terminal device in the terminal device group, performing the random access procedure based on the random access trigger information.

5. The method according to claim 4, wherein the random access trigger information is carried on a common control channel; or the random access trigger information is carried on a common control channel scrambled by using a common RNTI.

6. The method according to claim 5, wherein the common RNTI is configured by the network device for the terminal device.

7. The method according to any one of claims 3 to 6, wherein the performing the random access procedure based on the terminal group information comprises:
sending a random access request message to the network device based on the random access trigger information; and
receiving a random access response message from the network device.

8. The method according to claim 7, wherein the method further comprises:
if the terminal device is not the first terminal device in the terminal device group, receiving the random access response message sent by the network device.

9. The method according to claim 7 or 8, wherein the random access response message comprises a plurality of temporary C-RNTIs, and the plurality of temporary C-RNTIs are in one-to-one correspondence with a plurality of terminal devices in the terminal device group.

10. The method according to claim 9, wherein the method further comprises:
determining, from the plurality of temporary C-RNTIs based on an identifier of the terminal device in the terminal device group, a temporary C-RNTI corresponding to the terminal device.

11. The method according to any one of claims 3 to 9, wherein the determining, based on the terminal group information, whether the terminal device is the first terminal device in the terminal device group comprises:
when the terminal group information comprises a first parameter, and the first parameter indicates the identifier of the first terminal device in the terminal device group, determining, based on the first parameter, whether the terminal device is the first terminal device in the terminal device group;
when the terminal group information comprises a second parameter, and the second parameter indicates whether the terminal device is the first terminal device in the terminal device group, determining, based on the second parameter, whether the terminal device is the first terminal device in the terminal device group;
if the identifier of the terminal device in the terminal device group is a first identifier, the terminal device being the first terminal device in the terminal device group; or
if the terminal device is a 1^{st} terminal device in the terminal device group, the terminal device being the first terminal device in the terminal device group.

12. A communication apparatus, comprising a functional module configured to implement the method according to any one of claims 1 to 11.

13. A communication apparatus, comprising a memory and a processor, wherein
the memory is configured to store a computer program or instructions; and
the processor is configured to execute the computer program or the instructions in the memory, to implement the method according to any one of claims 1 to 11.

14. A communication system, wherein the communication system comprises a terminal device and a network device, and the terminal device and the network device are configured to implement the method according to claims 1 to 11.

15. A computer-readable storage medium, wherein the computer-readable storage medium stores program code to be executed by a computer, and the program code comprises instructions for implementing the method according to any one of claims 1 to 11.

16. A computer program product, wherein the computer program product comprises instructions for implementing the communication method according to any one of claims 1 to 11.

17. A communication apparatus, comprising a processor, wherein
the processor is configured to execute a computer program or instructions in a memory, to implement the method according to any one of claims 1 to 11.
